# FASCICULE DE BREVET EUROPEEN

(11) **EP 2 597 017 B1**
(45) Date de publication et mention de la délivrance du brevet: **20.04.2016**
(21) Numéro de dépôt: 12193383.2
(22) Date de dépôt: 20.11.2012
(51) Int. Cl.: B62D 25/14, B62D 29/04

(54) **Traverse tubulaire composite légère pour tableau de bord de véhicule automobile**
Leichter rohrförmiger Verbundquerträger für Kfz-Armaturenbrett
Lightweight composite tubular crossmember for an automobile dashboard

(30) Priorité: 24.11.2011 FR 1160719
(43) Date de publication de la demande: 29.05.2013
(73) Titulaire: Rehau SA, 57340 Morhange (FR)
(72) Inventeur: Ludwig, Hans Joachim, 72654 NECKARTENZLINGEN (DE); Pennerath, Eddy, 57450 HENRIVILLE (FR); Spies, Ina, 95111 REHAU (DE)
(74) Mandataire: Merckling, Norbert

(56) Documents cités:
- EP-A2- 1 415 897
- WO-A1-92/01885
- DE-A1-102009 006 960
- DE-U1- 20 221 554
- FR-A5- 2 401 595
- GB-A- 1 214 205

## Description

La présente invention se rapporte à une traverse tubulaire composite légère, par exemple réalisée par la technique du pull-winding, pour un tableau de bord de véhicule automobile, telle que décrit dans le document EP 1 415 897 A.

Dans le domaine de la construction des automobiles, on cherche actuellement à alléger au maximum les véhicules pour économiser le carburant. Ceci se traduit par le remplacement de certains éléments métalliques, notamment des pièces de carrosserie ou de structure, par des pièces similaires en matière plastique plus légères. Les métaux légers, tels que l'aluminium sont utilisés, mais réservés aux véhicules haut de gamme en raison de leur coût élevé.

L'inconvénient des pièces en matière plastique par rapport à celles en métal est leur plus faible résistance mécanique, aussi les constructeurs limitent-ils principalement l'utilisation des pièces en matière plastiques à des structures de parement et d'habillage tout en conservant l'utilisation des pièces métalliques pour des structures de châssis et de renfort.

Parmi ces structures habituellement en métal, on peut citer la traverse de tableau de bord, qui s'étend transversalement au véhicule à l'avant de l'habitacle et qui est fixée au niveau de ses extrémités aux montants de carrosserie.

Cette traverse remplit deux fonctions importantes : elle sert tout d'abord à rigidifier la caisse du véhicule automobile en reliant les deux flancs du véhicule. Elle joue ainsi un rôle d'étai servant à conserver la largeur du véhicule en cas de choc latéral et empêchant l'enfoncement pour protéger les passagers dans l'habitacle. Elle sert ensuite de support pour plusieurs éléments fonctionnels du véhicule, dont le tableau de bord, également appelé planche de bord, la colonne de direction et son volant, ainsi qu'éventuellement les airbags, la boîte à gants et/ou des conduits d'air du système de climatisation.

Du fait de sa double fonction, cette traverse doit être très rigide et capable de supporter de nombreuses contraintes de nature variée. En effet, elle doit être capable de résister :
- à la flexion pour ne pas plier sous le poids des différents éléments fonctionnels et accessoires qu'elle supporte,
- au flambage pour ne pas se déformer ou se rompre en cas d'accident avec choc latéral,
- à la flexion pour éviter le recul du volant susceptible de gravement blesser le conducteur en cas d'accident avec choc frontal, et
- à la torsion pour résister et ne pas entrer en résonance avec les vibrations du volant et de la colonne de direction qui sont des pièces métalliques lourdes.

A cause de ces sollicitations, nombreuses, importantes et variées, qui s'exercent sur cette pièce, il n'est pas évident de la remplacer par une pièce en matière plastique plus légère. Pour lui conférer une rigidité suffisante, un tel remplacement impliquerait en effet d'augmenter considérablement l'épaisseur de la traverse, ce qui se traduirait par une augmentation désavantageuse de sa masse et de son coût, et par un volume global de la pièce beaucoup plus important, incompatible avec l'espace exigu disponible pour la mise en place de la traverse dans un environnement très encombré.

Même si dans l'art antérieur quelques traverses composites à base de métal et de matières plastiques ont été proposées, toutes ces contraintes expliquent que la réalisation d'une traverse de tableau de bord complètement sans métal n'a pas été possible jusqu'à présent.

Le but de l'invention consiste justement à trouver une alternative à ces traverses en métal en proposant une traverse de tableau de bord entièrement non métallique, suffisamment rigide pour supporter les équipements et pour répondre aux exigences de résistance aux chocs et aux vibrations, qui soit légère et économique, tout en étant facile à fabriquer.

On connait également par le modèle d'utilité allemand DE 202 21 554 U1, une traverse de tableau de bord obtenue par l'assemblage de plusieurs éléments dont l'un d'entre eux est un élément tubulaire coudé réalisé en matière plastique renforcée par des fibres de verre ou de carbone.

L'importante rigidité nécessaire à l'application visée est obtenue par la forme coudée de cet élément tubulaire qui s'étend du pilier avant gauche du véhicule jusqu'au sol du véhicule au niveau du tunnel de cardan.

L'invention enseigne un nouveau type de traverse non métallique, qui est suffisamment rigide pour servir de traverse de bord alors qu'elle conserve une direction générale rectiligne.

Pour cela, l'invention propose une traverse de tableau de bord pour un véhicule automobile qui comprend un tube de direction générale rectiligne, composé d'une succession de couches concentriques, formées chacune de fils de verre enrobés d'une résine thermoplastique polymérisée ou de fils de carbone enrobés d'une résine thermoplastique polymérisée compatible, ceux-ci étant unifiés sur sensiblement toute la longueur du tube par fusion à chaud puis consolidation des résines thermoplastiques polymérisées.

Ce tube comprend successivement, en allant du centre du tube vers sa périphérie, au moins :
- une première couche comprenant au moins un enroulement présentant un angle d'enroulement compris entre 30° et 90° par rapport à la direction générale longitudinale du tube, de fils de verre enrobés de la résine thermoplastique polymérisée ;
- une deuxième couche comprenant des fils de verre disposés sensiblement longitudinalement par rapport à la direction générale du tube, c'est-à-dire présentant un angle d'hélice à faible pas, compris entre 0° et 10° par rapport à la direction générale longitudinale du tube, et enrobés de la résine thermoplastique polymérisée ;
- une troisième couche comprenant au moins deux enroulements croisés, inclinés selon un angle compris entre 40° et 60° par rapport à la direction générale longitudinale du tube, de fils de carbone enrobés de la résine thermoplastique polymérisée compatible ; et
- une quatrième couche comprenant au moins un enroulement présentant un angle compris entre 70° et 90° par rapport à la direction générale du tube, de fils de verre enrobés de la résine thermoplastique polymérisée.

Selon un mode de réalisation préférentiel, ces couches peuvent être réalisées à partir de bandes constituées chacune d'une juxtaposition de fils de verre ou de fils de carbone enrobés d'une résine thermoplastique polymérisée, telle que du polypropylène ou du polyamide, l'ensemble des fils étant unifié sur sensiblement toute la longueur du tube par fusion à chaud puis solidification des résines thermoplastiques polymérisées.

Par l'utilisation combinée de fibres de verre et de fibres de carbone, disposées les unes par rapport autres de manière adaptée et noyées dans une matrice en matière thermoplastique, la traverse pour tableau de bord selon l'invention présente une rigidité multidirectionnelle suffisante pour respecter les exigences des constructeurs en terme de sécurité, avec un gain de poids pouvant aller jusqu'à trente à quarante pourcents et une augmentation de diamètre limitée restant acceptable.

L'utilisation de matière plastique se traduit également par l'utilisation d'outils de moulage, de soudage et de fabrication qui sont en général moins chers que ceux habituellement utilisés pour les pièces en métal.

La traverse de tableau de bord peut comporter en outre des éléments fonctionnels d'appui ou de support entièrement ou partiellement en matière plastique, notamment une jambe de force, des flasques d'extrémité et/ou un support de colonne de direction, qui peuvent facilement être solidarisés par soudage, soudage laser ou collage ou autre moyen d'immobilisation sur la traverse de tableau de bord à base de matière thermoplastique. La traverse de tableau de bord selon l'invention peut également être prolongée dans sa direction générale longitudinale par un ou plusieurs éléments de prolongation métalliques ou réalisés entièrement ou partiellement en matière plastique.

La traverse de tableau de bord selon l'invention peut par exemple être fabriquée par un procédé continu du type pull-winding, ou par un procédé discontinu d'enroulement filamentaire autour d'un mandrin fixe ou rotatif.

D'autres caractéristiques et avantages de l'invention apparaîtront dans la description qui suit, donnée à titre d'exemple et accompagnée des dessins dans lesquels :
- la figure 1 est une vue en perspective d'ensemble d'un exemple de traverse pour tableau de bord selon l'invention ;
- la figure 2 est une vue en coupe schématique d'un premier exemple de tube de traverse pour tableau de bord selon l'invention ;
- la figure 3 est une vue en perspective partiellement éclatée, du tube de la figure 3 illustrant sa constitution ;
- la figure 4 est une vue en coupe schématique d'un deuxième exemple de tube de traverse pour tableau de bord selon l'invention ;
- la figure 5 est une vue en perspective partiellement éclatée, du tube de la figure 4 illustrant sa constitution ;
- la figure 6 est une vue de profil illustrant de manière schématique un procédé de fabrication par pull-winding du tube de traverse pour tableau de bord selon l'invention ;
- la figure 7 est une vue de profil illustrant de manière schématique un autre procédé de fabrication du tube de traverse pour tableau de bord selon l'invention.

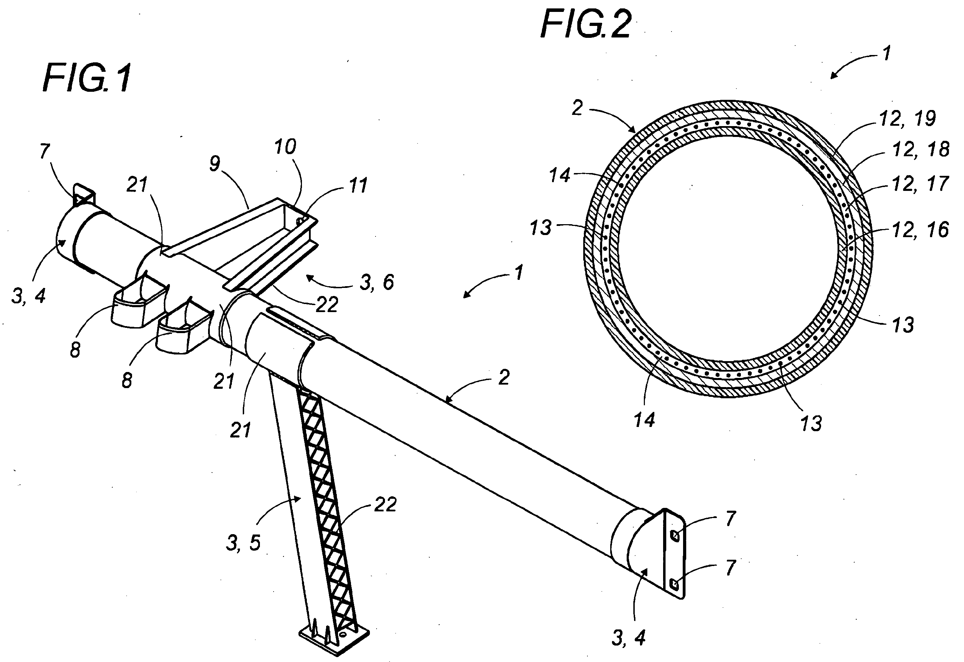

Le système selon la présente invention va maintenant être décrit de façon détaillée en référence aux figures 1 à 7. Les éléments équivalents représentés sur les différentes figures porteront les mêmes références numériques.

Sur la figure 1, on a représenté un exemple de traverse 1 pour tableau de bord selon l'invention qui comporte un tube 2 et un ensemble d'éléments fonctionnels 3 d'appui ou de support montés sur le tube 2, à savoir par exemple, deux flasques d'extrémité 4, une jambe de force 5 et un support de colonne de direction 6.

Les flasques d'extrémité 4 sont emmanchés à chacune des extrémités du tube 2 et permettent classiquement de fixer le tube aux deux montants verticaux de carrosserie (non représentés) par vissage à travers les ouvertures 7.

La jambe de force 5 sert classiquement à relier le tube 2 au plancher du véhicule et le support de colonne de direction 6 permet d'une part de fixer la colonne de direction par vissage au moyen des pattes 8 et sert d'autre part à relier le tube 2 au tablier du véhicule au moyen d'une prolongation 9 en U terminée par une platine d'appui 10 dans laquelle est ménagée une ouverture de vissage 11.

Bien entendu, l'homme du métier pourra imaginer bien d'autres variantes pour ces éléments fonctionnels 3, que ce soit au niveau de leur forme, de leur nature, de leur nombre et/ou de leur taille, selon les besoins particuliers de l'application et le modèle du véhicule à équiper.

On pourra par exemple imaginer un tube 2 trop court pour relier directement les deux montants verticaux avant de la carrosserie, mais prolongé selon sa direction générale longitudinale par un ou plusieurs éléments de prolongation en matière plastique, composites ou métalliques, conférant à l'ensemble une longueur suffisante pour relier les deux montants verticaux avant de la carrosserie.

D'autre part, le tube 2 a été représenté sur les différentes figures comme étant parfaitement rectiligne. On pourra également envisager des variantes dans lesquelles il pourra être légèrement différent, en fonction de l'encombrement, des autres éléments techniques du véhicule situés à proximité et/ou de l'exiguïté de son environnement immédiat, tout en restant globalement rectiligne, c'est-à-dire en conservant une direction générale sensiblement rectiligne.

Comme le montrent les figures 2 à 5, le tube 2 est composé de plusieurs couches 12 concentriques, qui se succèdent radialement et qui sont formées chacune de fils 13 de verre ou de carbone enrobés ou noyés dans une résine thermoplastique polymérisée 14.

La juxtaposition de ces couches 12 concentriques forme l'épaisseur du tube 2 dont les fils 13 de verre ou de carbone assurent la résistance structurelle et dont la résine thermoplastique 14 assure la cohésion d'ensemble par consolidation sur toute la longueur du tube, à savoir par fusion à chaud puis solidification de la résine thermoplastique polymérisée sur toute la longueur du tube.

Chacune de ces couches peut être réalisée à partir de fils indépendants, enrobés chacun de résine thermoplastique polymérisée, ou préférentiellement à partir de bandes telles que 15 constituées de la juxtaposition et/ou de l'empilement de plusieurs fils noyés dans la résine thermoplastique polymérisée.

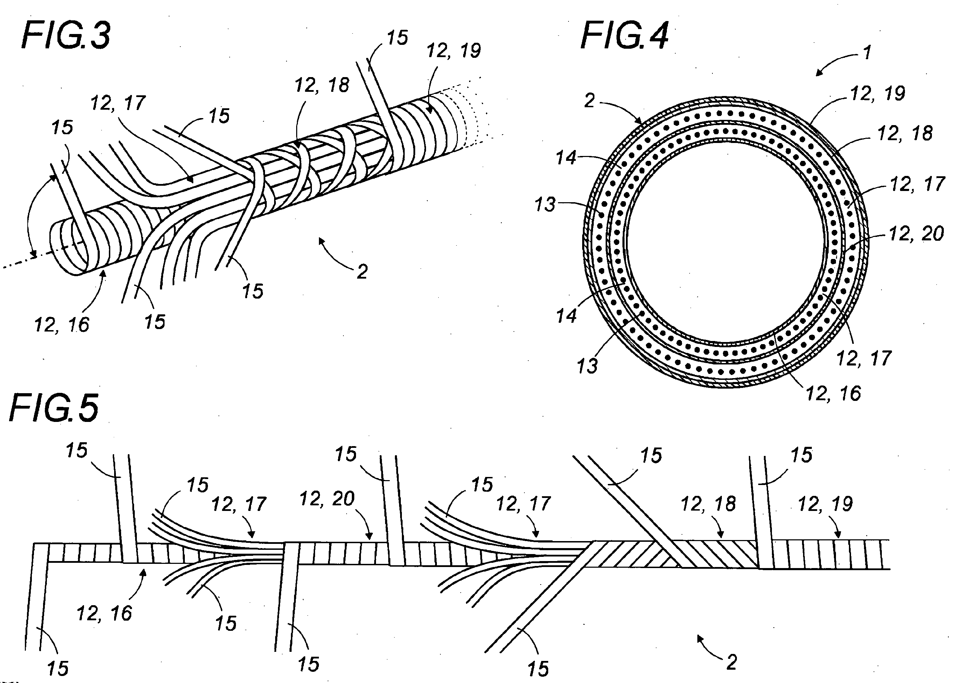

Bien que sur les figures 3 et 5, les couches soient formées de bandes 15 à section rectangulaire, il est possible de les remplacer par tout autre ensemble de fils, de préférence en nappes, lesquels sont enrobés de résine thermoplastique polymérisée. On peut ainsi envisager de former des couches à partir de bandes à section carrée, ronde, triangulaire, ovale, trapézoïdale ou autre.

En outre, chaque enroulement peut comporter une ou plusieurs, voire une multitude d'épaisseurs de bandes 15 ou de fils 13 enrobés superposés, jusqu'à obtenir l'épaisseur souhaitée pour la couche concernée du tube 2.

Dans le cas où une couche est formée de plusieurs enroulements différents et où plusieurs épaisseurs de chacun d'entre eux sont nécessaires, ces épaisseurs peuvent se superposer successivement pour chacun des enroulements ou peuvent plus préférentiellement s'intercaler alternativement, toute autre combinaison ou disposition étant également possible.

Dans l'exemple représenté sur les figures 2 et 3, le tube 2 comprend quatre couches 12 concentriques, que l'on va décrire successivement en allant du centre du tube vers sa périphérie.

La première couche 16 est formée d'un enroulement de fils 13 ou de bandes 15 de fils 13 enrobés d'une résine thermoplastique polymérisée 14, qui présente un angle compris entre 30° et 90° par rapport à la direction générale du tube 2.

Dans l'exemple représenté sur la figure 3, cet enroulement est sensiblement transversal au tube 2, c'est-à-dire qu'il présente un angle compris entre 80° et 90° par rapport à la direction générale du tube 2.

Des propriétés mécaniques similaires pourraient être obtenues en remplaçant, par exemple, cet enroulement transversal unique par deux enroulements inclinés en sens opposé l'un de l'autre, par exemple à environ 30° ou à environ 85° comme par exemple sur la variante de la figure 5, de manière à pouvoir être croisés l'un par rapport à l'autre.

Les fils utilisés pour cette première couche 16 sont des fils de verre, qui sont suffisamment résistants sur le plan mécanique et thermique et qui sont satisfaisants d'un point de vue économique.

Cet enroulement transversal initial forme une structure tubulaire de base servant de support aux couches supérieures et confère au tube 2 une bonne résistance à la compression lui permettant de résister aux forces ayant tendance à l'écraser et au poids des éléments fonctionnels et dispositifs et accessoires qu'il supporte.

La deuxième couche 17 comprend des fils de verre enrobés de résine thermoplastique polymérisée, qui sont disposés sensiblement longitudinalement par rapport à la direction générale du tube, c'est-à-dire selon un angle compris entre 0° et 10° par rapport à la direction générale du tube 2.

Par cette disposition longitudinale des fils, cette couche 17 permet avantageusement à la traverse 1 de résister aux efforts de flexion qui s'appliquent sur le tube notamment en cas de choc avant, ce qui permet en outre de limiter le recul dangereux de la colonne de direction et du volant dans une telle situation.

Cette disposition longitudinale des fils de la couche 17 permet également à la traverse 1 de résister aux efforts de flambage qui sinon auraient tendance à provoquer le fléchissement du tube 2 soumis à un effort normal de compression en cas de choc latéral.

Le tube 2 comporte ensuite une troisième couche 18 qui comprend plusieurs enroulements croisés, inclinés par rapport à la direction générale longitudinale du tube 2, de fils de carbone enrobés de résine thermoplastique polymérisée.

Sur l'exemple représenté, la troisième couche 18 est formée de deux enroulements croisés, inclinés diagonalement, c'est-à-dire selon un angle compris entre 40° et 60° et préférentiellement voisin de 45° par rapport à la direction générale longitudinale du tube 2.

Cette troisième couche 18 permet au tube de résister à la torsion, et ainsi aux vibrations de la colonne de direction qui se traduisent par un couple tendant à vriller la traverse 1.

On peut ainsi superposer alternativement plusieurs épaisseurs de ces enroulements croisés jusqu'à obtenir la résistance mécanique nécessaire recherchée.

Cette troisième couche 18 est préférentiellement située à proximité de la périphérie du tube 2 car la résistance à la torsion obtenue augmente plus on éloigne radialement les fils de l'axe longitudinal du tube.

Malgré leur coût supérieur, les fils de carbone beaucoup plus résistants sont ici préférés aux fils de verre, car les efforts de torsion subis par le tube sont très importants et constituent le problème majeur à résoudre.

Le tube 2 comporte une quatrième couche 19 qui constitue la couche périphérique externe du tube et qui comprend au moins un enroulement présentant un angle compris entre 70° et 90° par rapport à la direction générale du tube, de fils de verre enrobés de résine thermoplastique polymérisée.

Cette dernière couche 19 offre une surface extérieure adaptée à la fixation d'éléments fonctionnels tels que 3 à base de matière plastique sur le tube 2 par soudage ou par collage, car son enroulement sensiblement transversal à la direction générale du tube lui confère une résistance accrue à l'arrachement pour les éléments fonctionnels qui lui sont solidarisés.

Là encore, cet enroulement unique pourrait être remplacé par deux enroulements inclinés en sens opposé et croisés l'un par rapport à l'autre.

Bien entendu, chacune de ces différentes couches 12 peut être multipliée en nombre. De même, d'autres couches peuvent être ajoutées au tube de l'invention, les couches revendiquées ne représentant que les moyens essentiels de l'invention.

Ainsi par exemple, la variante du tube 2 représentée sur les figures 4 et 5 comporte une couche supplémentaire 20 intercalée au milieu de la deuxième couche 17.

En effet, lorsque l'épaisseur de la couche 17 qui renferme les fils sensiblement longitudinaux est importante, le tube 2 devient fragile à l'éclatement. Il est alors nécessaire d'intercaler des fils enroulés de manière inclinée afin d'augmenter la cohésion de l'ensemble et ainsi d'éviter la fissuration.

On peut par exemple déposer alternativement, toutes les quatre à cinq épaisseurs de fils 13 ou de bandes 15 de fils sensiblement longitudinaux, une épaisseur de fils 13 ou de bandes 15 de fils inclinés selon un angle compris entre 10° et 85°.

La couche supplémentaire 20 représentée sur la figure 5 est par exemple formée de deux enroulements croisés, inclinés selon un angle d'environ 85°.

Evidemment, plusieurs couches supplémentaires 20 similaires peuvent être nécessaires selon l'épaisseur de la couche 17.

De la même façon, l'épaisseur de chacune des couches n'est pas forcément identique, l'importance de chacune dépendant des caractéristiques résultantes mécaniques, dimensionnelles et pondérales souhaitées pour le tube 2, ainsi que de considérations économiques ou liées à la fabrication.

Les différents fils 13 et bandes 15 faisant partie du tube 2 sont enrobés ou noyés chacun dans une résine thermoplastique polymérisée, qui peut être identique pour toutes les couches 12 du tube ou différente d'une couche à l'autre à condition d'être compatible avec les autres résines thermoplastiques polymérisées utilisées de manière que les différentes couches du tube puissent être unifiées et consolidées par fusion à chaud puis solidification de ces résines thermoplastiques polymérisées, sur sensiblement toute la longueur du tube.

Ces résines thermoplastiques polymérisées compatibles sont préférentiellement à base de polypropylène ou de polyamide.

Il s'agit de préférence de résines qui ont une base chimique commune, et plus préférentiellement d'une seule et même résine pour l'ensemble des couches 12 du tube et encore plus préférentiellement de polypropylène.

Outre le tube 2 décrit précédemment, la traverse 1 de tableau de bord selon l'invention peut comporter également des éléments fonctionnels 3 d'appui ou de support qui sont solidarisés au tube 2. On peut citer de manière non limitative : une jambe de force 5, des flasques d'extrémité 4 et un support de colonne de direction 2 comme représenté sur la figure 1. Un ou plusieurs éléments de prolongation (non représentés) peuvent également être prévus afin de prolonger le tube 2 selon sa direction générale longitudinale.

Ces éléments fonctionnels 3 sont préférentiellement fabriqués indépendamment au tube 2 et sont ensuite rapportés sur celui-ci notamment par soudage ou par collage.

Ces éléments fonctionnels 3 peuvent avantageusement être entièrement ou partiellement réalisés en matière plastique, ce qui assure, outre un gain de poids non négligeable et un coût plus réduit, une excellente solidarisation avec le tube 2.

Avantageusement, on peut utiliser pour cela la technique de soudage par laser. Dans ce cas, la couche périphérique 19 du tube est réalisée opaque, et préférentiellement de couleur noire, alors que la zone de rattachement au tube des éléments fonctionnels 3 est transparente à la lumière laser utilisée. Cette zone de rattachement au tube peut être réalisée par exemple sous la forme de bagues 21 entourant entièrement ou partiellement le tube 2.

La technique de soudage par laser consiste, après avoir positionné les éléments fonctionnels 3 sur le tube 2, à faire passer un faisceau laser à travers la zone de rattachement transparente des éléments fonctionnels 3, qui va échauffer et faire fondre localement la partie opaque ou noire du tube 2 située en dessous, qui à son tour va échauffer et faire fondre localement la zone de rattachement transparente en contact avec elle. Ces deux surfaces de contact sont prévues pour être compatibles. Elles se mêlent à l'état fondu et se solidarisent fortement en refroidissant et en durcissant.

Afin d'offrir une résistance mécanique adaptée à leur usage, les éléments fonctionnels 3 peuvent avantageusement être renforcés par des fibres de verre, des fils de verre, des pièces métalliques ou des nervures en plastique injecté telles que 22. Un élément fonctionnel métallique, notamment de prolongation, est également envisageable.

Après avoir décrit la constitution originale de la traverse de tableau de bord 1 selon l'invention, nous allons maintenant décrire à titre d'exemple non limitatif deux procédés de fabrication, utilisables pour obtenir un tube 2 conforme à l'invention.

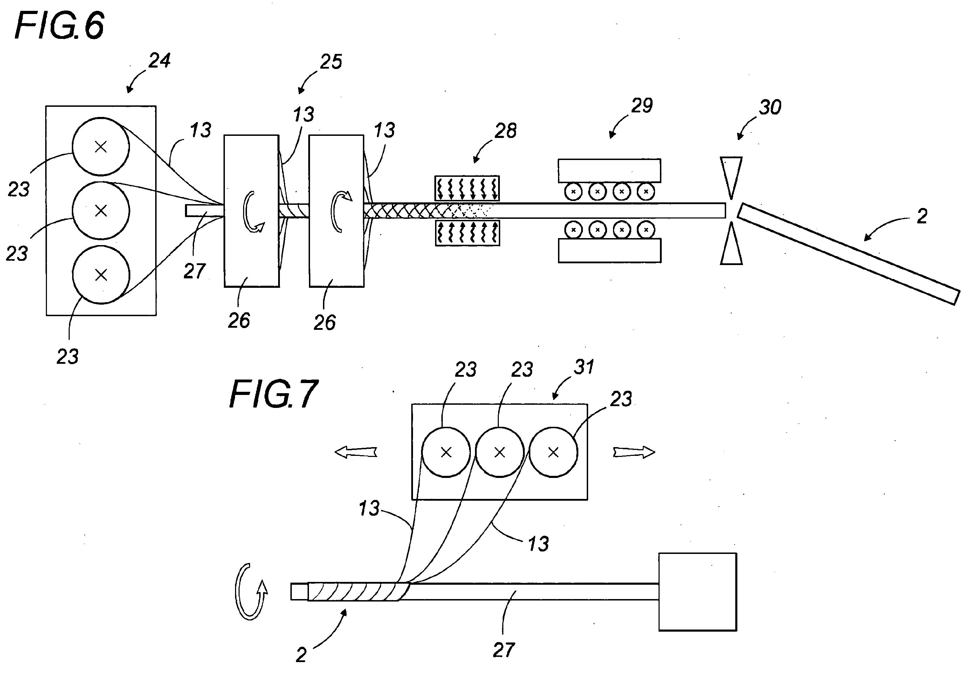

Le premier procédé, représenté schématiquement sur la figure 6, est un procédé continu qui utilise la technique du pull-winding.

Des distributeurs de bandes et/ou de fils, par exemple sous la forme de bobines 23 alimentent en bandes 15 et/ou en fils 13 un dispositif de dépose longitudinale 24 ainsi qu'un dispositif d'enroulement 25 comportant plusieurs tambours de guipage 26 qui déposent les bandes 15 ou fils 13 autour d'un mandrin 27.

Les tambours de guipage 26 réalisent les différents enroulements des fils et/ou bandes par rotation autour du mandrin 27. On obtient les différentes inclinaisons des enroulements en faisant varier la vitesse de rotation des tambours de guipage 26. Pour réaliser les enroulements croisés, on utilise deux tambours de guipage 26 successifs qui tournent en sens inverse.

Ces dispositifs sont suivis d'une unité de chauffage 28 qui fait fondre les différentes résines thermoplastiques composant les couches concentriques du tube et réalise ainsi leur cohésion par fusion à chaud puis solidification. Le tube 2 est ainsi consolidé et rigidifié sur toute la longueur du tube. Cette unité de chauffage 28 comprend préférentiellement un manchon chauffant qui permet de calibrer le tube en lui donnant sa forme extérieure.

Comme il s'agit d'un procédé de fabrication en continu, on utilise également une unité de traction 29 située en aval, par exemple une bande de tirage à deux chenilles, qui tire sur le tube consolidé pour l'extraire du mandrin 27 et l'amener vers l'unité suivante du procédé de fabrication.

Cette unité suivante est un poste de découpe 30 dans lequel le tube ainsi constitué se trouve coupé en tronçons à la longueur désirée.

Le deuxième procédé, représenté schématiquement sur la figure 7, est cette fois un procédé discontinu qui permet de former un seul tube à la fois.

On utilise cette fois un mandrin 27 rotatif autour duquel on enroule les fils 13 ou les bandes 15. Les bobines 23 de fils 13 ou de bandes 15 sont chargées sur un robot 31 qui se déplace en translation devant le mandrin 27 tout en dévidant les bobines.

Avec un tel procédé, on ne peut pas disposer les fils parfaitement longitudinalement. Un angle minimal d'environ 5° doit être réalisé.

Là encore, cette étape d'enroulement est ensuite suivie par une étape de chauffage non représentée afin de faire fondre les différentes résines thermoplastiques et ainsi de lier entre elles les couches concentriques du tube sur toute la longueur de celui-ci par fusion à chaud puis solidification. Ceci procure une grande rigidité au tube sur toute sa longueur.

De manière évidente, l'invention ne se limite pas aux modes de réalisation préférentiels décrits précédemment et représentés sur les différentes figures. Bien d'autres variantes sont possibles tout en restant dans le principe inventif défini par les revendications.

## Revendications

1. Traverse (1) de tableau de bord d'un véhicule automobile, tubulaire et composite **caractérisée :**
**en ce qu'**elle comprend un tube (2), de direction générale rectiligne, composé d'une succession de couches (12) concentriques, formées chacune de fils (13) de verre enrobés d'une résine thermoplastique polymérisée (14) ou de fils (13) de carbone enrobés d'une résine thermoplastique polymérisée compatible, l'ensemble des fils étant unifié sur sensiblement toute la longueur du tube par fusion à chaud puis solidification des résines thermoplastiques polymérisées ;
et **en ce que** ce tube (2) comprend successivement, en allant du centre du tube vers sa périphérie, au moins :
- une première couche (16) comprenant au moins un enroulement présentant un angle d'enroulement compris entre 30° et 90° par rapport à la direction générale du tube (2), de fils (13) de verre enrobés de la résine thermoplastique polymérisée (14) ;
- une deuxième couche (17) comprenant des fils (13) de verre disposés sensiblement longitudinalement par rapport à la direction générale du tube (2), c'est-à-dire présentant un angle compris entre 0° et 10° par rapport à la direction générale du tube (2), et enrobés de la résine thermoplastique polymérisée (14) ;
- une troisième couche (18) comprenant au moins deux enroulements croisés, inclinés selon un angle compris entre 40° et 60° par rapport à la direction générale du tube (2), de fils (13) de carbone enrobés de la résine thermoplastique polymérisée compatible ; et
- une quatrième couche (19) comprenant au moins un enroulement présentant un angle compris entre 70° et 90° par rapport à la direction générale du tube (2), de fils (13) de verre enrobés de la résine thermoplastique polymérisée (14).

2. Traverse (1) de tableau de bord selon la revendication 1 **caractérisée en ce que** les couches (12) sont réalisées à partir de bandes (15) constituées chacune d'une juxtaposition de fils (13) de verre enrobés d'une résine thermoplastique polymérisée (14) ou de fils (13) de carbone enrobés d'une résine thermoplastique polymérisée compatible, l'ensemble des fils étant unifié sur sensiblement toute la longueur du tube par fusion à chaud puis solidification des résines thermoplastiques polymérisées.

3. Traverse (1) de tableau de bord selon la revendication 1 ou 2 **caractérisée en ce que** la résine thermoplastique polymérisée (14) et la résine thermoplastique polymérisée compatible ont une base chimique commune ou sont identiques.

4. Traverse (1) de tableau de bord selon la revendication 1 ou 2 **caractérisée en ce que** la résine thermoplastique polymérisée (14) ou la résine thermoplastique polymérisée compatible est à base de polypropylène ou de polyamide.

5. Traverse (1) de tableau de bord selon la revendication 1 ou 2 **caractérisée en ce que** la première couche (16) comprend un enroulement qui présente un angle compris entre 80° et 90° par rapport à la direction générale du tube (2), ou deux enroulements croisés inclinés selon un angle d'environ 30° ou d'environ 85° par rapport à la direction générale du tube (2).

6. Traverse (1) de tableau de bord selon la revendication 1 ou 2 **caractérisée en ce que** la troisième couche (18) comprend deux enroulements croisés, inclinés à environ 45° par rapport à la direction générale du tube (2).

7. Traverse (1) de tableau de bord selon la revendication 1 ou 2 **caractérisée en ce que** la troisième couche (18) est située à proximité de la périphérie du tube (2).

8. Traverse (1) de tableau de bord selon la revendication 1 ou 2 **caractérisée en ce qu'**au moins une couche supplémentaire (20), comprenant au moins un enroulement incliné selon un angle compris entre 10° et 85° par rapport à la direction générale du tube (2), est intercalée entre les fils (13) de verre sensiblement longitudinaux de la deuxième couche (17).

9. Traverse (1) de tableau de bord selon la revendication 1 ou 2 **caractérisée en ce que** sa couche périphérique est opaque ou noire.

10. Traverse (1) de tableau de bord selon la revendication 1 **caractérisée en ce qu'**elle comporte en outre des éléments fonctionnels (3) d'appui et de support qui sont solidarisés au tube, soudés, soudés par laser ou collés au tube (2).

11. Traverse (1) de tableau de bord selon la revendication 10 **caractérisée en ce que** ces éléments fonctionnels (3) sont entièrement ou partiellement en matière plastique.

12. Traverse (1) de tableau de bord selon la revendication 10 **caractérisée en ce que** ces éléments fonctionnels (3) sont renforcés par des fibres de verre, des fils de verre, des pièces métalliques ou des nervures en plastique injecté.

13. Traverse (1) de tableau de bord selon la revendication 10 **caractérisée en ce que** ces éléments fonctionnels (3) comprennent une jambe de force (5), des flasques d'extrémité (4) ou un support de colonne de direction (6).

14. Traverse (1) de tableau de bord selon la revendication 1 **caractérisée en ce qu'**elle comporte en outre au moins un élément de prolongation qui prolonge le tube (2) selon sa direction générale longitudinale.

15. Procédé de fabrication d'une traverse (1) de tableau de bord selon l'une quelconque des revendications 1 à 14 **caractérisé en ce que** l'on utilise un procédé continu de pull-winding, ou discontinu d'enroulement filamentaire autour d'un mandrin (27) rotatif.

## Patentansprüche

1. Querträger (1) für Armaturenbrett eines Kraftfahrzeugs, rohrförmig und aus Kompositmaterial, **dadurch gekennzeichnet, dass**:
er ein Rohr (2) umfasst, allgemein geradlinig verlaufend, bestehend aus aufeinanderliegenden konzentrischen Schichten (12), jeweils geformt aus Glasfäden (13) ummantelt mit einem polymerisierten, thermoplastischen Harz (14) oder aus Karbonfäden (13) ummantelt mit einem kompatiblen thermoplastischen, polymerisierten Harz, alle Fäden sind auf deutlich der Gesamtlänge des Rohrs durch Heißverschmelzung, dann Erstarnmg der thermoplastischen, polymerisierten Harze, fest miteinander verbunden;
und dadurch, dass das Rohr (2) aufeinander liegend, ausgehend vom Rohrzentrum zu seiner Peripherie, mindestens umfasst:
• eine erste Schicht (16), die mindestens eine Wicklung umfasst, die einen Umschlingungswinkel zwischen 30° und 90°, bezogen auf die allgemeine Richtung des Rohrs (2), und Glasfäden (13), ummantelt mit einem polymerisierten, thermoplastischen Harz (14), aufweist.
• eine zweite Schicht (17) mit Glasfäden (13), die deutlich in Längsrichtung bezogen auf die allgemeine Richtung des Rohrs (2) angeordnet sind, das heißt die einen Winkel zwischen 0° und 10°, bezogen auf die allgemeine Richtung des Rohrs (2) aufweisen und mit einem polymerisierten, thermoplastischen Harz (14) ummantelt sind.
• eine dritte Schicht (18), die mindestens zwei überkreuzte Wicklungen umfasst, geneigt in einem Winkel zwischen 40° und 60° bezogen auf die allgemeine Richtung des Rohrs (2), Karbonfäden (13), ummantelt mit einem kompatiblen, polymerisierten, thermoplastischen Harz (14); und
• eine vierte Schicht (19) die mindestens eine Wicklung umfasst, die einen Umschlingungswinkel zwischen 70° und 90°, bezogen auf die allgemeine Richtung des Rohrs (2) aufweist, sowie Glasfäden (13), ummantelt mit einem polymerisierten, thermoplastischen Harz (14).

2. Querträger (1) für Armaturenbrett eines Kraftfahrzeugs, gemäß Anspruch 1, **dadurch gekennzeichnet, dass** die Schichten (12) mit Streifen (15) hergestellt werden, die jeweils aus hintereinander liegenden Glasfäden (13), ummantelt mit einem polymerisierten, thermoplastischen Harz (14) bestehen oder aus Karbonfasern (13), ummantelt mit einem kompatiblen, polymerisierten, thermoplastischen Harz (14), alle Fäden sind auf deutlich der Gesamtlänge des Rohrs durch Heißverschmelzung, dann Erstarrung der thermoplastischen, polymerisierten Harze, fest miteinander verbunden

3. Querträger (1) für Armaturenbrett eines Kraftfahrzeugs, gemäß Anspruch 1 oder 2, **dadurch gekennzeichnet, dass** das polymerisierte, thermoplastische Harz (14) und das kompatible, polymerisierte, thermoplastische Harz eine gemeinsame chemische Basis haben oder identisch sind.

4. Querträger (1) für Armaturenbrett eines Kraftfahrzeugs, gemäß Anspruch 1 oder 2, **dadurch gekennzeichnet, dass** es sich bei dem polymerisierten, thermoplastischen Harz (14) und dem kompatiblen, polymerisierten, thermoplastischen Harz um Harze auf Polypropylen- oder Polyamid- Basis handelt.

5. Querträger (1) für Armaturenbrett eines Kraftfahrzeugs, gemäß Anspruch 1 oder 2, **dadurch gekennzeichnet, dass** die erste Schicht (16) eine Wicklung umfasst, die einen Umschlingungswinkel zwischen 80° und 90°, bezogen auf die allgemeine Richtung des Rohrs (2) aufweist, oder zwei überkreuzte Wicklungen, geneigt in einem Winkel zwischen 30° und ungefähr 85° bezogen auf die allgemeine Richtung des Rohrs (2).

6. Querträger (1) für Armaturenbrett eines Kraftfahrzeugs, gemäß Anspruch 1 oder 2, **dadurch gekennzeichnet, dass** die dritte Schicht (18) zwei überkreuzte Wicklungen umfasst, geneigt in einem Winkel von ungefähr 45° bezogen auf die allgemeine Richtung des Rohrs (2).

7. Querträger (1) für Armaturenbrett eines Kraftfahrzeugs, gemäß Anspruch 1 oder 2, **dadurch gekennzeichnet, dass** die dritte Schicht (18) in Nähe der Peripherie des Rohrs (2) liegt.

8. Querträger (1) für Armaturenbrett eines Kraftfahrzeugs, gemäß Anspruch 1 oder 2, **dadurch gekennzeichnet, dass** mindestens eine zusätzliche Schicht (20), mit mindestens einer Wicklung mit einem Winkel zwischen 10° und 85°, bezogen auf die allgemeine Richtung des Rohrs (2), zwischen die deutlich längsverlaufenden Glasfäden (13) der zweiten Schicht (17) eingelegt ist.

9. Querträger (1) für Armaturenbrett eines Kraftfahrzeugs, gemäß Anspruch 1 oder 2, **dadurch gekennzeichnet, dass** die periphere Schicht opak oder schwarz ist.

10. Querträger (1) für Armaturenbrett eines Kraftfahrzeugs, gemäß Anspruch 1, **dadurch gekennzeichnet, dass** sie außerdem funktionelle Stütz- und Halteelemente (3) umfasst, die am Rohr befestigt, angeschweißt, lasergeschweißt oder am Rohr (2) angeklebt sind

11. Querträger (1) für Armaturenbrett eines Kraftfahrzeugs, gemäß Anspruch 10, **dadurch gekennzeichnet, dass** diese funktionellen Elemente (3) ganz oder teilweise aus Kunststoff bestehen.

12. Querträger (1) für Armaturenbrett eines Kraftfahrzeugs, gemäß Anspruch 10, **dadurch gekennzeichnet, dass** diese funktionellen Elemente (3) durch Glasfasern, Glasfäden, Metallteile oder eingespritzte Kunststoffrinnen verstärkt sind.

13. Querträger (1) für Armaturenbrett eines Kraftfahrzeugs, gemäß Anspruch 10, **dadurch gekennzeichnet, dass** diese funktionellen Elemente (3) ein Federbein (5), Kopfplatten (4) oder einen Lenksäulenhalter (6) umfassen.

14. Querträger (1) für Armaturenbrett eines Kraftfahrzeugs, gemäß Anspruch 1, **dadurch gekennzeichnet, dass** er mindestens ein Verlängerungselement umfasst, das das Rohr (2) entsprechend seiner allgemeinen Längsrichtung verlängert.

15. Verfahren zur Herstellung eines Querträger (1) für Armaturenbrett gemäß irgendeinem der vorhergehenden Ansprüche 1 bis 14, **dadurch gekennzeichnet, dass** ein kontinuierliches Pull-winding - Verfahren oder ein diskontinuierliches Filamentwicklungsverfahren um einen Wickeldorn (27) verwendet wird.

## Claims

1. Dashboard cross member (1) for an automobile vehicle, tubular and composite, **characterized in that**:
it comprises a tube (2), generally rectilinear, comprising a succession of concentric layers (12), each consisting of glass yarns (13) coated with a polymerized thermoplastic resin (14) or carbon yarns (13) coated with a compatible polymerized thermoplastic resin, with all the yarns joined over approximately the entire length of the tube by hot melting then solidification of the polymerized thermoplastic resins;
and **in that** this tube (2) includes in succession, from the center of the tube towards its periphery, at the least:
• a first layer (16) comprising at least one winding having a winding angle included between 30° and 90° with respect to the general direction of the tube (2), of glass yarns (13) coated with polymerized thermoplastic resin (14);
• a second layer (17) comprising glass yarns (13) set out essentially longitudinal with respect to the general direction of the tube (2), that is at an angle included between 0° and 10° with respect to the general direction of the tube (2), and coated with polymerized thermoplastic resin (14);
• a third layer (18) comprising at least two cross-laid windings, inclined at an angle included between 40° and 60° with respect to the general direction of the tube (2), of carbon yarns (13) coated with compatible polymerized thermoplastic resin;
• a fourth layer (19) comprising at least one winding having an angle included between 70° and 90° with respect to the general direction of the tube (2), of glass yarns (13) coated with polymerized thermoplastic resin (14).

2. Dashboard cross member (1) according to claim 1 **characterized in that** the layers (12) are produced from strips (15) each comprising a juxtaposition of glass yarns (13) coated with a polymerized thermoplastic resin (14) or of carbon yarns (13) coated with a compatible polymerized thermoplastic resin, all these yarns being joined over approximately the entire length of the tube by hot melting then the solidification of the polymerized thermoplastic resins.

3. Dashboard cross member (1) according to claim 1 or 2 **characterized in that** the polymerized thermoplastic resin (14) and the compatible polymerized thermoplastic resin have a similar chemical base or are identical.

4. Dashboard cross member (1) according to claim 1 or 2 **characterized in that** the polymerized thermoplastic resin (14) or the compatible polymerized thermoplastic resin is based on polypropylene or polyamide.

5. Dashboard cross member (1) according to claim 1 or 2 **characterized in that** the first layer (16) includes a winding that has an angle included between 80° and 90° with respect to the general direction of the tube (2), or two cross-laid windings inclined at an angle of approximately 30° or approximately 85° with respect to the general direction of the tube (2).

6. Dashboard cross member (1) according to claim 1 or 2 **characterized in that** the third layer (18) includes two cross-laid windings, inclined at approximately 45° with respect to the general direction of the tube (2).

7. Dashboard cross member (1) according to claim 1 or 2 **characterized in that** the third layer (18) is located near the periphery of the tube (2).

8. Dashboard cross member (1) according to claim 1 or 2 **characterized in that** at least one additional layer (20) comprising at least one winding inclined according to an angle included between 10° and 85° with respect to the general direction of the tube (2) is interposed between the essentially longitudinal glass yarns (13) of the second layer (17).

9. Dashboard cross member (1) according to claim 1 or 2 **characterized in that** the peripheral layer is opaque or black.

10. Dashboard cross member (1) according to claim 1 **characterized in that** it also includes bearing and supporting functional components (3) which are made integral with the tube, welded, laser-welded or bonded to the tube (2).

11. Dashboard cross member (1) according to claim 10 **characterized in that** these functional components (3) are entirely or partially made of plastic.

12. Dashboard cross member (1) according to claim 10 **characterized in that** these functional components (3) are reinforced by glass fibers, glass yarns, metal parts or injected plastic ribs.

13. Dashboard cross member (1) according to claim 10 **characterized in that** these functional components (3) include a strut (5), end flanges (4) or a steering column support (6).

14. Dashboard cross member (1) according to claim 1 **characterized in that** it also includes at least one extending component which extends the tube (2) in its general longitudinal direction.

15. Method of manufacturing a dashboard cross member (1) according to any one of the claims 1 to 14 **characterized in that** a continuous pull-winding method or a discontinuous method of filament winding around a rotary mandrel (27) is used
